(19) **Europäisches Patentamt / European Patent Office / Office européen des brevets**

(11) **EP 4 782 809 A1**

(12) # EUROPEAN PATENT APPLICATION
published in accordance with Art. 153(4) EPC

(43) Date of publication:
**29.07.2026 Bulletin 2026/31**

(21) Application number: **24867794.0**

(22) Date of filing: **29.03.2024**

(51) International Patent Classification (IPC):
*G01M 99/00* (2011.01)    *G01M 13/02* (2019.01)
*G21C 7/08* (2006.01)

(52) Cooperative Patent Classification (CPC):
**G01M 13/02; G01M 99/00; G21C 7/08;** Y02E 30/30

(86) International application number:
**PCT/JP2024/012988**

(87) International publication number:
**WO 2025/062704 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 JP 2023152487**

(71) Applicant: **Hitachi GE Vernova Nuclear Energy, Ltd.**
**Hitachi-shi, Ibaraki 317-0073 (JP)**

(72) Inventors:
• **NAKAMURA, Akihiro**
  **Tokyo 100-8280 (JP)**
• **OGAWA, Takashi**
  **Tokyo 100-8280 (JP)**
• **FURUTA, Yasuhiko**
  **Hitachi-shi, Ibaraki 317-0073 (JP)**
• **ONO, Kohei**
  **Hitachi-shi, Ibaraki 317-0073 (JP)**

(74) Representative: **MERH-IP Matias Erny Reichl
Hoffmann
Patentanwälte PartG mbB
Paul-Heyse-Straße 29
80336 München (DE)**

(54) **ABNORMALITY DETECTION DEVICE FOR CONTROL ROD DRIVE MECHANISM AND ABNORMALITY DETECTION METHOD FOR CONTROL ROD DRIVE MECHANISM**

(57) Provided are: a current acquisition unit 14 that acquires at least one phase current of an electric motor 1; a zero-cross section extraction unit 15, 15A that determines a zero-cross section including a zero-cross point from time-series data of the phase current acquired by the current acquisition unit 14, and extracts a current waveform in the zero-cross section; a feature value calculation unit 16 that calculates a feature value used for detection of an abnormality in the control rod drive mechanism 11 based on the current waveform in the zero-cross section; an abnormality diagnostic unit 17 that diagnoses an abnormality by using the feature value; and a transmission unit 18 that transmits a diagnosis result obtained by the abnormality diagnostic unit 17.

[Fig 2]

**EP 4 782 809 A1**

## Description

Technical Field

The present invention is an invention relating to a technology applied to a device associated with nuclear power generation to detect an abnormality in a control rod drive mechanism driven by an electric motor (motor).

Background Art

Patent Document 1 describes a reactor power control rod drive mechanism that is provided inside a housing located at a lower part of a nuclear reactor and transmits rotations of an electric motor to a hollow piston lifting mechanism to raise and lower the hollow piston to thereby insert and pull out a control rod into and from the inside of a reactor core. The drive mechanism includes a spool piece provided at a lower end of the housing, an outer yoke connected with a rotation shaft of the electric motor, an outer magnet provided on the outer yoke, an inner yoke provided inside the spool piece, an inner magnet provided on the inner yoke, and rotation detection means of the inner magnet.

Prior Art Document

Patent Document

Patent Document 1: JP-H10-10264-A

Summary of the Invention

Problems to be Solved by the Invention

With spreading of IoT (Internet of Things), advancement of AI (Artificial Intelligence), and a decrease in working population all simultaneously occurring in recent years, such a technology has been drawing attention that positively uses information acquired by sensors or the like for maintenance operation to improve maintenance work efficiency and labor-saving.

In these circumstances, diagnostic methods using sensor information have been proposed also for control rod drive mechanisms of nuclear power generation facilities so as to reduce inspection workloads or for other purposes.

Typical types of available sensors include vibration sensors and position sensors, for example. However, in view of installation easiness and other advantages, methods using a current sensor are considered to be particularly noteworthy methods.

For example, Patent Document 1 proposes a method which detects slipping of a magnet coupling caused by a load increase more than an allowable value on the basis of magnitude of current in an electric motor.

However, the method according to Patent Document 1 may be difficult to apply in cases where a drive source of a control rod drive mechanism is not an induction electric motor. When a load changes in an induction electric motor, a motor shaft rotates asynchronously with the frequency of electric motor current, i.e., a phenomenon called "slipping" occurs, regardless of the control type or the presence or absence of control. Slipping thus caused produces a large current change. According to Patent Document 1, therefore, abnormality detection is conducted on the basis of current magnitude.

However, for motors other than induction electric motors, such as magnetic motors and stepping motors including hybrid types, the foregoing "slipping" does not occur. In addition, in cases of open-loop control for these electric motors, typical values indicating current magnitude, such as effective values and maximum values, are substantially changeless (less than 1%) even in the presence of a large load change.

In other words, detection of an abnormality based on "current magnitude," such as effective values and maximum values, may be difficult for magnetic motors or stepping motors. Accordingly, such a technology capable of detecting an abnormality in a control rod drive mechanism based on factors other than current magnitude has been demanded in order to make use of advantages of easy-handling current sensors.

The present invention has been developed to investigate the aforementioned problems arising from conventional technologies, and solve these problems.

Accordingly, an object of the present invention is to provide an abnormality diagnostic device and an abnormality diagnostic method for detecting an abnormality of a control rod drive mechanism on the basis of a feature value other than "current magnitude" obtained from electric motor current.

The foregoing and other objects, and novel characteristics of the present invention will become apparent in the light of explanation in the present description and the accompanying drawings.

Means for Solving the Problems

The present invention includes a plurality of means for solving the aforementioned problems. An example of these means is a device for diagnosing an abnormality in a control rod drive mechanism that drives a ball screw by using an electric motor to execute insertion and pullout of a control rod. The abnormality diagnostic device includes: a current acquisition unit that acquires at least one phase current of the electric motor; a zero-cross section extraction unit that determines a zero-cross section including a zero-cross point from time-series data of the phase current acquired by the current acquisition unit, and extracts a current waveform in the zero-cross section; a feature value calculation unit that calculates a feature value used for detection of an abnormality in the control rod drive mechanism based on the current waveform in the zero-cross section; an abnormality diagnostic unit that diagnoses an abnormality by using the feature value; and a transmission unit that transmits a diagnosis result obtained by the abnormality diagnostic unit.

Advantages of the Invention

According to the present invention, an abnormality in a control rod drive mechanism driven by a magnet motor or a stepping motor is detectable on the basis of a feature value other than "current magnitude" obtained from electric motor current. Problems, configurations, and advantages other than those described above will become apparent in the light of description of exemplary embodiments presented below.

Brief Description of the Drawings

[Fig. 1] Fig. 1 is a schematic diagram of a control rod drive mechanism.
[Fig. 2] Fig. 2 is a configuration diagram of an abnormality diagnostic device for a control rod drive mechanism according to a first embodiment of the present invention.
[Fig. 3] Fig. 3 is a diagram illustrating a processing flow performed by a zero-cross section extraction unit.
[Fig. 4] Fig. 4 illustrates time-series data of electric motor current.
[Fig. 5] Fig. 5 is a diagram for supplementing description of a specific section.
[Fig. 6] Fig. 6 is a diagram for supplementing description of feature values.
[Fig. 7] Fig. 7 is a diagram for supplementing description of feature values.
[Fig. 8] Fig. 8 is a diagram illustrating a processing flow performed by a zero-cross section extraction unit included in an abnormality diagnostic device for a control rod drive mechanism according to a second embodiment.

Modes for Carrying Out the Invention

An abnormality detection device for a control rod drive mechanism and an abnormality detection method for a control rod drive mechanism according to embodiments of the present invention will be hereinafter described with reference to the drawings. Note that identical or corresponding constituent elements illustrated in the drawings which will be referred to in the present description are given identical or similar reference characters, and explanation of these constituent elements will not be repeated where appropriate.
Typical embodiments according to the invention disclosed in the present application will be discussed in detail. Reference characters included in the drawings for reference indicate only examples contained in concepts of constituent elements given these characters.

<First Embodiment>

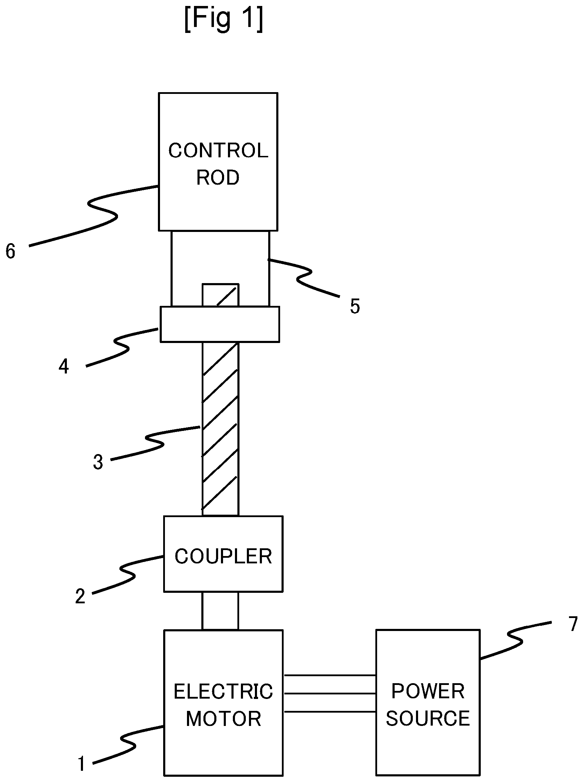

An abnormality detection device for a control rod drive mechanism and an abnormality detection method for a control rod drive mechanism according to a first embodiment of the present invention will be described with reference to Figs. 1 to 7.
First, an overall configuration of a control rod drive mechanism for which abnormal diagnosis is conducted by the abnormal detection device will be explained with reference to Fig. 1. Discussed in the first embodiment of the present invention will be a device which diagnoses an abnormality in the control rod drive mechanism by using one phase electric motor current as input. Fig. 1 is a schematic diagram of the control rod drive mechanism.
A control rod drive mechanism 11 illustrated in Fig. 1 is a device which moves upward and downward (inserts/pulls out) a control rod 6 for controlling reactor power. The device configuration will be hereinafter discussed.
A power source 7 supplies periodic three-phase rectangular wave voltage (shifted by 120 degrees for each phase) to an electric motor 1 under open loop (feedforward) control to drive the electric motor 1.

It is assumed in the description of the present embodiment that the electric motor 1 is either a stepping motor or a magnet motor and is driven by rectangular wave voltage only. However, the same explanation is applicable to the electric motor 1 driven by sine wave voltage.

A shaft of the electric motor 1 driven by the power source 7 is coupled with a ball screw 3 via a coupler 2, and the ball screw 3 rotates synchronously with the shaft. This rotation moves a ball nut 4 upward and downward, and also a coupling rod 5 and a control rod 6 carried on the ball nut 4 move upward and downward accordingly.

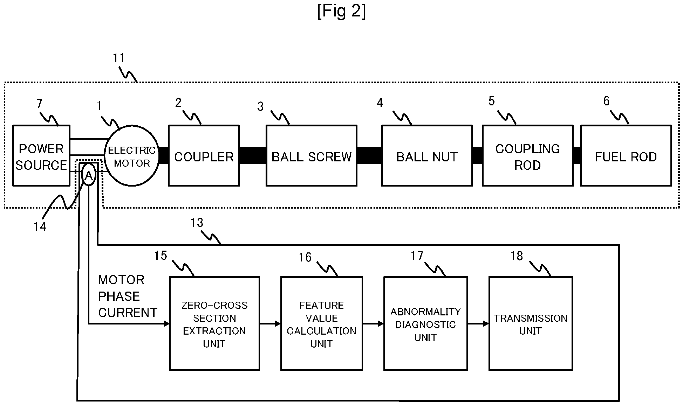

According to a control rod drive mechanism 11 configured and acting as above, abnormal occurrence of change in sliding resistance may be caused due to jamming by contaminants, poor lubrication, contact with a housing, or separation of parts, for example. Discussed hereinafter with reference to Fig. 2 and other figures will be a device configuration of an abnormality diagnostic device 13 for detecting an abnormality in the control rod drive mechanism 11.

It is preferable that an operation timing of the abnormality diagnostic device 13 or an execution timing of an abnormality detection method for the control rod drive mechanism is basically the time of regular inspection. However, a constant detection mode during normal power generation may be adopted.

Fig. 2 illustrates an overview of the configurations of the control rod drive mechanism 11 and the abnormality diagnostic device 13. The control rod drive mechanism 11 in this figure is identical to the control rod drive mechanism 11 in Fig. 1, and therefore the explanation thereof will be omitted.

The abnormality diagnostic device 13 illustrated in Fig. 2 is a device for diagnosing an abnormality in the control rod drive mechanism 11 which drives the ball screw 3 by using the electric motor 1 to execute insertion and pullout of the control rod 6. The abnormality diagnostic device 13 includes a current acquisition unit 14, a zero-cross section extraction unit 15, a feature value calculation unit 16, an abnormality diagnostic unit 17, and a transmission unit 18.

In these components, each of the zero-cross section extraction unit 15, the feature value calculation unit 16, the abnormality diagnostic unit 17, and the transmission unit 18 includes a central processing unit (CPU), and a memory connected with the CPU.

Note that operation control processes to be executed may be combined into one program or may be each separated into a plurality of programs. Further, the separated programs may be combined with one another.

A part or all of programs retained in each of devices may be implemented by dedicated hardware or may be modularized. Moreover, various programs may be installed in respective devices by using program distribution servers or external storage media, or may be provided by updating existing devices.

Furthermore, respective devices may be independent devices connected to one another by a wired or wireless network, or two or more of devices may be integrated with each other.

The current acquisition unit 14 includes a known sensor which acquires at least one phase current of the electric motor 1. It is preferable that the current acquisition unit 14 constitutes a main body which executes a current acquisition step for acquiring at least one phase current of the electric motor 1.

The zero-cross section extraction unit 15 determines a zero-cross section including a zero-cross point on the basis of time-series data of the phase current acquired by the current acquisition unit 14, and extracts a current waveform in the zero-cross section. The feature value calculation unit 16 constitutes a main body which executes a zero-cross section extraction step for determining a zero-cross section including a zero-cross point from time-series data of phase current acquired in the current acquisition step, and extracting a current waveform in the zero-cross section.

The feature value calculation unit 16 calculates a feature value used for detection of an abnormality in the control rod drive mechanism 11 based on the current waveform in the zero-cross section. The feature value calculation unit 16 constitutes a main body for executing a feature value calculation step for calculating a feature value used for detection of an abnormality in the control rod drive mechanism 11 based on a current waveform in a zero-cross section.

The abnormality diagnostic unit 17 diagnoses an abnormality by using the feature value. The abnormality diagnostic unit 17 constitutes a main body which executes an abnormality diagnostic step for diagnosing an abnormality by using a feature value.

The transmission unit 18 transmits a diagnosis result obtained by the abnormality diagnostic unit 17. The transmission unit 18 constitutes a main body which executes a transmission step for transmitting a diagnosis result obtained in the abnormality diagnostic step.

In the abnormality diagnostic device 13, first, the zero-cross section extraction unit 15 extracts only current data in a specific section including zero-cross timing of the current by use of at least one phase electric motor current (time-series data) as input acquired by the current acquisition unit 14. Subsequently, the feature value calculation unit 16 uses the extracted current data in the section to calculate a feature value used for abnormality diagnosis. Thereafter, the calculated feature value is input to the abnormality diagnostic unit 17, and abnormality diagnosis is conducted using machine learning, a statistical method, or other methods. The transmission unit 18 transmits an abnormality result thus obtained to a worker or other systems.

Details of the respective processing blocks will be discussed hereinafter.

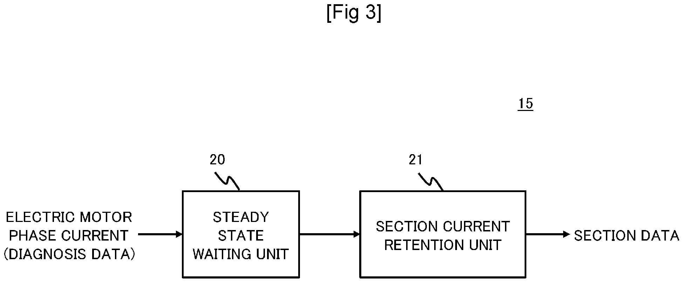

First, the zero-cross section extraction unit 15 will be explained with reference to Fig. 3. As illustrated in Fig. 3, the zero-cross section extraction unit 15 includes a steady state waiting unit 20 and a section current retention unit 21.

According to the present embodiment, input of electric motor phase current (data for diagnosis) enters the steady state waiting unit 20. Accordingly, in the present embodiment, the zero-cross section extraction unit 15 extracts, as a current waveform to be extracted, the data itself received from the current acquisition unit 14.

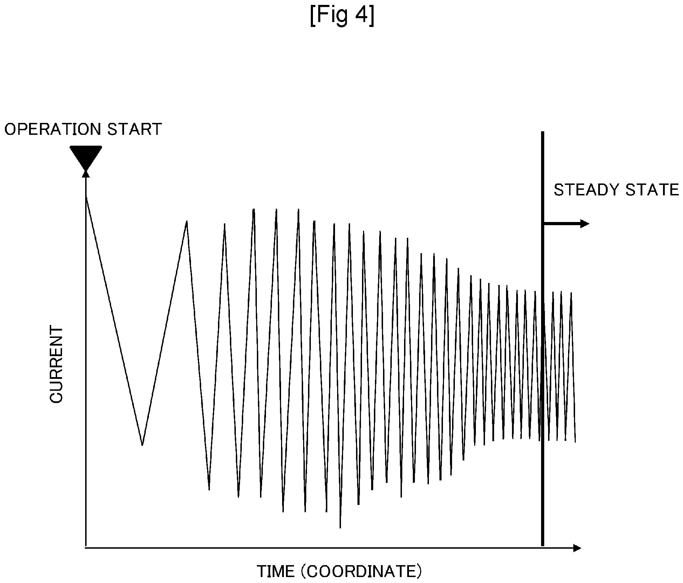

The input electric motor current transiently changes in frequency and amplitude due to acceleration and deceleration of the electric motor immediately after an operation start (ball screw drive start) or immediately before a stop, as illustrated in Fig. 4. In this transient state, the phase or the amplitude of the current may be changed depending on a difference in the initial state of the electric motor, the ball screw, or the like. Accordingly, it is highly likely that other data more appropriate is available for use of abnormality diagnosis.

Therefore, in the steady state waiting unit 20, it is preferable to wait until a steady state is reached on the basis of, as a determination criterion, whether or not the amplitude or the frequency falls within a fixed range (e.g., within ±1%), or whether or not a specific time or period has elapsed after the operation start, as illustrated in Fig. 4. The steady state waiting unit 20 outputs data obtained in and after the section where the steady state is reached, to the section current retention unit 21.

Thereafter, the section current retention unit 21 of the zero-cross section extraction unit 15 extracts and retains a current value in a specific section including a zero-cross point necessary for abnormality diagnosis.

In this case, the section current retention unit 21 can extract the zero-cross section from a steady state where a maximum value or an effective value of the current of the electric motor 1 is determined, by the steady state waiting unit 20, to fall within a predetermined error range relative to a predetermined value, or from a steady state determined, by the steady state waiting unit 20, as a state where a specific time has elapsed from the drive start of the electric motor 1 or where occurrence of a periodic change in phase current has reached a specific number of times from the drive start of the electric motor 1.

On this basis, the zero-cross section can be determined by extracting from within a predetermined range around a zero-cross point as a center, or from a predetermined section in the current period after the time at which the phase current has a maximum value, or can be determined from within a predetermined range around a point as a center arbitrary selected from within a predetermined section of the current period after the time at which the phase current has a maximum value.

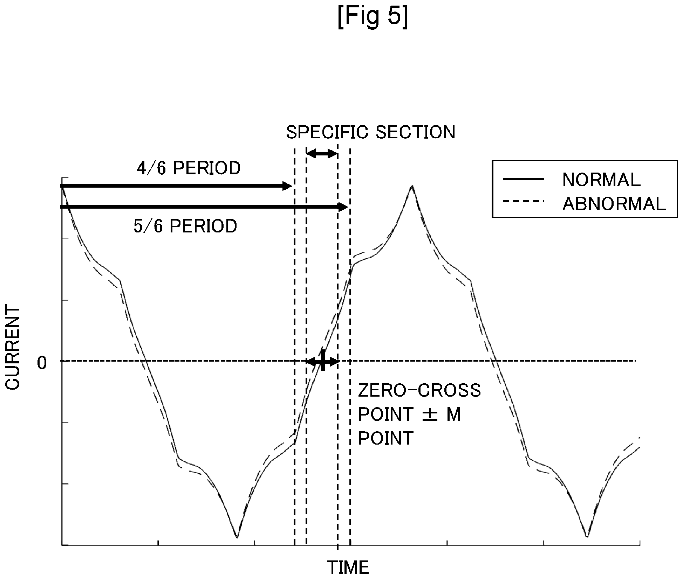

As an extraction method, the following method may be adopted, for example. A zero-cross point calculated from current data in a normal state (a zero-cross point in a current increasing direction in the present embodiment, the same process being applied in a case of the opposite direction) is set to a coordinate (time) center. Data in a range of ±M points (M: zero or larger integer value, only the zero-cross point when M = 0) from the coordinate center may be determined as specific section data. Fig. 5 is a chart illustrating this method. In the figure, the horizontal axis represents time, and the vertical axis represents current values. Waveforms in a normal state and an abnormal state are overlaid.

As apparent from the figure, where an abnormality occurs, the maximum current value and the current period are unchanged, and a largest difference in the current value is produced around the zero-cross point. It is therefore effective to use a current value around this point (in general, the current value around the zero-cross point is not called "current magnitude") for abnormality diagnosis. Accordingly, only current in the section including the zero-cross point is extracted.

In addition, regarding a method, executed by the zero-cross section extraction unit 15, for extracting the section including the zero-cross point, a method may be adopted in which the zero-cross section is extracted from a section between a point at which 5/6 of the current period has elapsed from the coordinate (time) where the current has a maximum value and a point at which 4/6 of the current period has elapsed from the coordinate (time) where the current has a maximum value, or a method may be adopted in which an arbitrary point is selected within the section and data in a range of ±M points from the selected point is determined as specific section data, instead of the above-described contents, as illustrated in FIG. 5 as well. Moreover, in case of using U-phase current, the zero-cross section may be extracted from a period where U-V voltage, V-W voltage, and W-U voltage become positive, zero, and negative, respectively, by utilizing command values of voltage applied to the electric motor 1.

The feature value calculation unit 16 will be subsequently discussed.

In the feature value calculation unit 16, as an example of a feature value, a current value at the coordinates of the zero-cross point in the normal state of the control rod drive mechanism 11, a current value at an arbitrary point in the zero-cross section of the phase current in the normal state of the control rod drive mechanism 11, or an integral value of the current in a range extending to the left and right directions by an equal distance from the coordinates of the zero-cross point as a center in the normal state of the control rod drive mechanism 11 may be adopted.

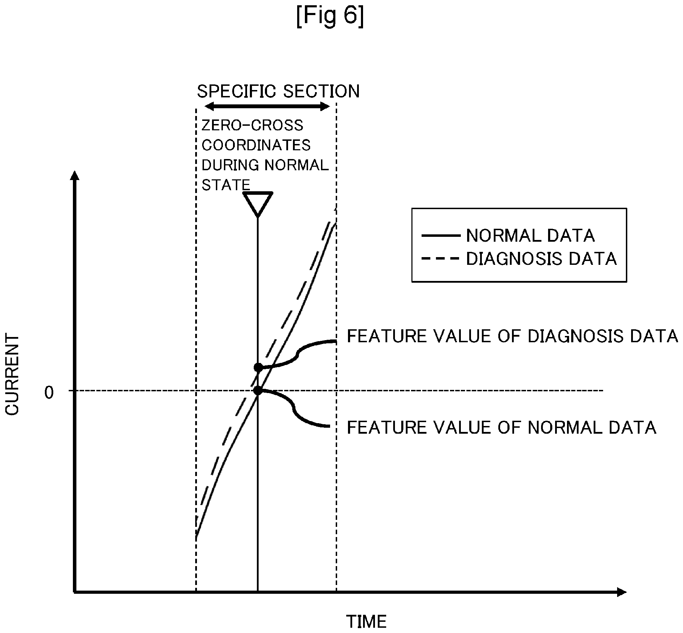

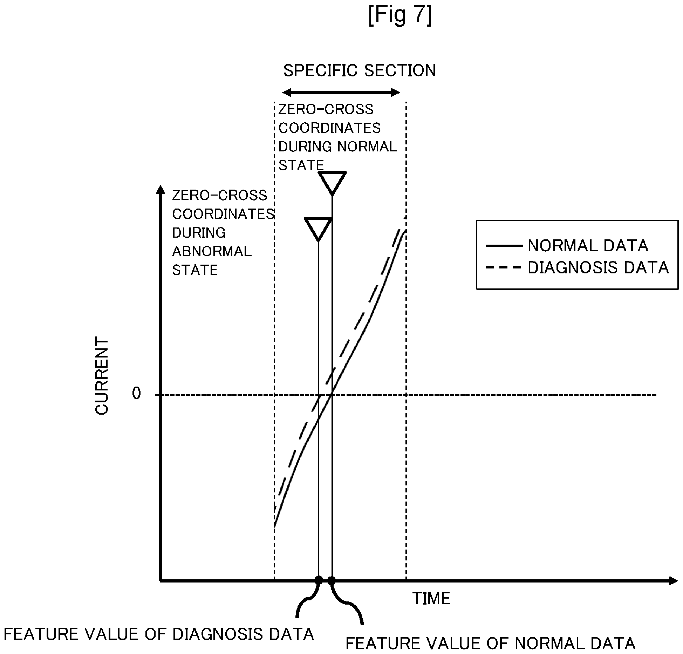

Specifically, first, if the above-described variable M is zero, a measured phase current value (diagnosis data) itself obtained at the zero-cross point coordinate (time) in the normal state, for example, may be adopted as a feature value, as illustrated in Fig. 6. Moreover, a current value itself at an arbitrary point in the section between a point at which 5/6 of the current period is elapsed from the coordinate (time) where the current has a maximum value and a point at which 4/6 of the current period is elapsed from the coordinate (time) where the current has a maximum value, may be adopted as a feature value. In addition, if M is not zero, an integral value of current values in the specific section may be adopted as a feature value. Furthermore, as illustrated in Fig. 7, a zero-cross point coordinate (time) is calculated also for diagnosis data, and a coordinate value (time) from the specific section start time may be adopted as a feature value.

The abnormality diagnostic unit 17 will be subsequently discussed. For example, the abnormality diagnostic unit 17 may determine whether a feature value is a threshold or higher, and output binary data indicating a normality or an abnormality. Moreover, the abnormality diagnostic unit 17 may calculate beforehand an average value and a variance of a plurality of sample feature values acquired in the normal state, calculate Mahalanobis distance (MTD) by using the following equation (1), and output the calculated continuous values as a degree of abnormality.

$$MTD = (Feature\_meas - Feature\_normal\_ave)2/Feature\_normal\_disp \; ... \; (1)$$

Here, Feature_meas in equation (1) represents a feature value corresponding to measured current, Feature_normal_ave represents an average value of feature values in the normal state, and Feature_normal_disp represents a variance of feature values in the normal state.

In addition, the method for calculating the degree of abnormality is not limited to the above-described method, but may be a method using machine learning or deep learning, such as One Class SVM. Furthermore, if an average and a variance of feature values are calculated for both of normal data and diagnosis data beforehand, average value examination can be practiced on the basis of these values, and thus results of this examination can be output.

The transmission unit 18 will be finally discussed.

The transmission unit 18 is an apparatus which transmits an abnormality diagnosis result to at least one of a controller of the control rod drive mechanism 11, a controller of the electric motor 1, a control system of a power plant, a display, a speaker, and a lamp, and has a role of notifying a worker of a state of the control rod drive mechanism 11.

Moreover, in addition to the foregoing function, the transmission unit 18 transmits a result obtained by the abnormality diagnostic unit 17 to the controller of the electric motor 1, the controller of the control rod drive mechanism 11, or the controller/system of the power plant. The transmitted result is available as feedback data for device control such as an emergency stop and fallback.

Advantageous effects of the present embodiment will be subsequently described.

The abnormality diagnostic device 13 of the control rod drive mechanism 11 according to the first embodiment of the present invention described above is a device that diagnoses abnormality in the control rod drive mechanism 11 which drives the ball screw 3 by using the electric motor 1 to execute insertion and pullout of the control rod 6. The abnormality diagnostic device 13 includes the current acquisition unit 14 which acquires at least one phase current of the electric motor 1, the zero-cross section extraction unit 15 which determines a zero cross section including a zero-cross point on the basis of time-series data of the phase current acquired by the current acquisition unit 14, and extracts a current waveform in the zero-cross section, the feature value calculation unit 16 which calculates a feature value used for detection of an abnormality in the control rod drive mechanism 11 based on the current waveform in the zero-cross section, the abnormality diagnostic unit 17 that diagnoses abnormality by using the feature value, and the transmission unit 18 which transmits a diagnosis result obtained by the abnormality diagnostic unit 17.

Thus, novel types of the device and method for diagnosing abnormality in the control rod drive mechanism 11, which use a feature value other than "current magnitude" obtained from current of the electric motor 1, can be provided.

Moreover, the zero-cross section extraction unit 15 extracts the zero-cross section from a steady state where a maximum value or an effective value of the current of the electric motor 1 falls within a predetermined error range relative to a predetermined value, or from a steady state where a specific time has elapsed from the drive start of the electric motor 1 or where occurrence of a periodic change in phase current has reached a specific number of times from the drive start of the electric motor 1. Accordingly, the zero-cross section can be extracted from data in a steady state other than a section where the frequency or the amplitude of the current transiently changes. Thus, more accurate abnormality diagnosis can be executed.

Moreover, the zero-cross section extraction unit 15 adopts, as a current waveform to be extracted, the data itself received from the current acquisition unit 14. Accordingly, the processing speed can be improved.

Furthermore, adopting, as a feature value, a current value at the coordinates of the zero-cross point in the normal state of the control rod drive mechanism 11, a current value at an arbitrary point in the zero-cross section of the phase current in the normal state of the control rod drive mechanism 11, or an integral value of current in a range extending to the left and right directions by an equal distance from the coordinates of the zero-cross point as a center in the normal state of the control rod drive mechanism 11. Accordingly, more accurate distinction can be made between the normal state and the abnormal state.

In addition, the zero-cross section can be determined by extracting from within a predetermined range around a zero-cross point as a center, or from a predetermined section in the current period after the time at which the phase current has a maximum value, or can be determined from within a predetermined range around a point as a center arbitrary selected from within a predetermined section of the current period after the time at which the phase current has a maximum value. Accordingly, the section reliably including a current value around the zero-cross point, where a large difference is exhibited between the abnormal state and the normal state, can be extracted as the zero-cross section. Thus, an abnormality can be more reliably detected.

Besides, the transmission unit 18 transmits an abnormality diagnosis result to at least one of a controller of the control rod drive mechanism 11, a controller of the electric motor 1, a control system of a power plant, a display, a speaker, and a lamp. Accordingly, such a system can be provided that enables a worker to reliably recognize occurrence of an abnormality, or that automatically handles an abnormality after recognition of abnormality detection on the system side.

<Second Embodiment>

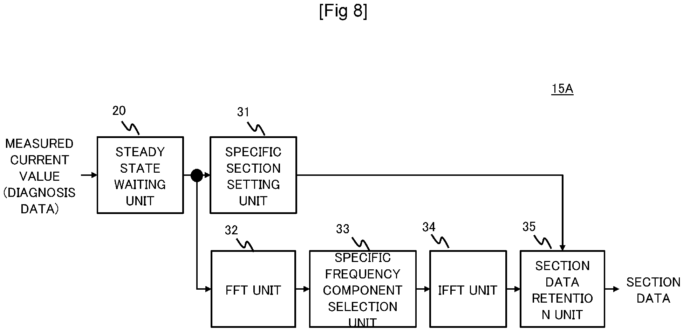

An abnormality detection device for a control rod drive mechanism and an abnormality detection method for a control rod drive mechanism according to a second embodiment of the present invention will be described with reference to Fig. 8. Note that the same processes as those discussed in the first embodiment will not be repeatedly explained, and only differences from the first embodiment will be chiefly explained herein.

Differences between the abnormality detection device for the control rod drive mechanism according to the present embodiment illustrated in Fig. 8 and the abnormality diagnostic device 13 for the control rod drive mechanism 11 of the first embodiment lie in processing details performed by a zero-cross section extraction unit 15A. Fig. 8 illustrates the details of processing.

The zero-cross section extraction unit 15A according to the present embodiment initially waits until a measured current value (diagnosis data) comes into a steady state in a manner similar to the manner in the first embodiment, and then specifies a data section including a zero-cross point (specific section setting unit 31). Thus, difficulty in identifying the zero-cross point is avoidable even when an original zero-cross point is not recognizable due to frequency decomposition by an FFT unit 32 discussed below.

Meanwhile, the zero-cross section extraction unit 15A is different from the zero-cross section extraction unit 15 in following points. In the zero-cross section extraction unit 15A, in order to extract, as a current waveform to be extracted, data included in a part of frequency components included in data acquired by the current acquisition unit 14, the FFT unit 32 performs frequency decomposition (FFT: fast Fourier transform) of measured current values obtained after the steady state is reached, and a specific frequency component selection unit 33 selects at least one or more frequency components (e.g., 5th or 7th order component of the current waveform) which remarkably change at the time of occurrence of an abnormality. Thereafter, an IFFT unit 34 performs retransform (IFFT: inverse fast Fourier transform) to time-series data. Finally, a section data retention unit 35 extracts data included in the section determined by the specific section setting unit 31 from a result output from the IFFT unit 34.

Processes following this process are similar to the corresponding processes in the first embodiment.

Other configurations and operations are substantially the same as the corresponding configurations and operations of the abnormality detection device for the control rod drive mechanism and the abnormality detection method for the control rod drive mechanism described above in the first embodiment, and therefore will not be discussed in detail.

The abnormality detection device for the control rod drive mechanism and the abnormality detection method for the control rod drive mechanism according to the second embodiment of the present invention can offer substantially the same advantageous effects as those of the abnormality detection device for the control rod drive mechanism and the abnormality detection method for the control rod drive mechanism described above in the first embodiment.

Moreover, the zero-cross section extraction unit 15A extracts, as a current waveform to be extracted, data included in a part of frequency components of data acquired by the current acquisition unit 14, to thereby exclude frequency components less changeable at the time of occurrence of an abnormality. Accordingly, diagnosis of a more minimal abnormality is enabled due to more recognizable of changes in current.

<Others>

Note that the present invention is not limited to the embodiments described above, but include various modifications. The embodiments discussed above in detail are presented only for a purpose of easy understanding of the present invention, and therefore all the configurations explained above are not necessarily required.

Moreover, a part of the configurations of one of the embodiments may be replaced with the configurations of the different embodiment, and the configurations of one of the embodiments may be added to the configurations of the different embodiment. Furthermore, a part of the configurations of each of the embodiments may be deleted, replaced, or additionally given other configurations.

Description of Reference Characters

1: electric motor
2: coupler
3: ball screw
4: ball nut
5: coupling rod
6: control rod
7: power source
11: control rod drive mechanism
13: abnormality diagnostic device
14: current acquisition unit
15: zero-cross section extraction unit
15a: zero-cross section extraction unit
16: feature value calculation unit
17: abnormality diagnostic unit
18: transmission unit
20: steady state waiting unit
21: section current retention unit
31: specific section setting unit
32: FFT unit
33: specific frequency component selection unit
34: IFFT unit
35: section data retention unit

## Claims

1. An abnormality diagnostic device for a control rod drive mechanism, the abnormality diagnostic device diagnoses an abnormality in a control rod drive mechanism that drives a ball screw by using an electric motor to execute insertion and pullout of a control rod, the abnormality diagnostic device comprising:

   a current acquisition unit that acquires at least one phase current of the electric motor;
   a zero-cross section extraction unit that determines a zero-cross section including a zero-cross point from time-series data of the phase current acquired by the current acquisition unit, and extracts a current waveform in the zero-cross section;
   a feature value calculation unit that calculates a feature value used for detection of an abnormality in the control rod drive mechanism based on the current waveform in the zero-cross section;
   an abnormality diagnostic unit that diagnoses an abnormality by using the feature value; and
   a transmission unit that transmits a diagnosis result obtained by the abnormality diagnostic unit.

2. The abnormality diagnostic device for a control rod drive mechanism according to claim 1, wherein
   the electric motor is either a stepping motor or a magnet motor.

3. The abnormality diagnostic device for a control rod drive mechanism according to claim 2, wherein
   the zero-cross section extraction unit extracts the zero-cross section from a steady state where a maximum value or an effective value of a current of the electric motor falls within a predetermined error range relative to a predetermined value.

4. The abnormality diagnostic device for a control rod drive mechanism according to claim 2, wherein
   the zero-cross section extraction unit extracts the zero-cross section from a steady state appearing after an elapse of a specific time or after a specific number of times of occurrence of a periodic change in the phase current is reached from a drive start of the electric motor.

5. The abnormality diagnostic device for a control rod drive mechanism according to claim 3 or 4, wherein
   the zero-cross section extraction unit adopts, as the current waveform to be extracted, either data itself received from the current acquisition unit or data included in a part of frequency components included in the data received from the current acquisition unit.

6. The abnormality diagnostic device for a control rod drive mechanism according to claim 3 or 4, wherein the feature value is a current value at coordinates of the zero-cross point in a normal state of the control rod drive mechanism.

7. The abnormality diagnostic device for a control rod drive mechanism according to claim 3 or 4, wherein the feature value is a current value at an arbitrary point in the zero-cross section of the phase current in a normal state of the control rod drive mechanism.

8. The abnormality diagnostic device for a control rod drive mechanism according to claim 3 or 4, wherein the feature value is an integral value of a current in a range extending to left and right directions by an equivalent distance from coordinates of the zero-cross point as a center in a normal state of the control rod drive mechanism.

9. The abnormality diagnostic device for a control rod drive mechanism according to claim 3 or 4, wherein the zero-cross section is determined from within a predetermined range around the zero-cross point as a center.

10. The abnormality diagnostic device for a control rod drive mechanism according to claim 3 or 4, wherein the zero-cross section is determined by extracting the zero-cross section from a predetermined section in a current period after a time at which the phase current has a maximum value.

11. The abnormality diagnostic device for a control rod drive mechanism according to claim 3 or 4, wherein the zero-cross section is determined from within a predetermined range around an arbitrary point as a center selected from within a predetermined section in a current period after a time at which the phase current has a maximum value.

12. The abnormality diagnostic device for a control rod drive mechanism according to claim 1, wherein the transmission unit transmits an abnormality diagnosis result to at least one of a controller of the control rod drive mechanism, a controller of the electric motor, a control system of a power plant, a display, a speaker, and a lamp.

13. An abnormality diagnostic method for a control rod drive mechanism, the abnormality diagnostic method diagnosing an abnormality in a control rod drive mechanism that drives a ball screw by using an electric motor to execute insertion and pullout of a control rod, the abnormality diagnostic method comprising:

a current acquisition step of acquiring at least one phase current of the electric motor;
a zero-cross section extraction step of determining a zero-cross section that includes a zero-cross point from time-series data of the phase current acquired in the current acquisition step, and extracting a current waveform in the zero-cross section;
a feature value calculation step of calculating a feature value used for detection of an abnormality in the control rod drive mechanism based on the current waveform in the zero-cross section;
an abnormality diagnostic step of diagnosing an abnormality by using the feature value; and
a transmission step of transmitting a diagnosis result obtained in the abnormality diagnostic step.

[Fig 1]

[Fig 2]

| POWER SOURCE | ELECTRIC MOTOR | COUPLER | BALL SCREW | BALL NUT | COUPLING ROD | FUEL ROD |

MOTOR PHASE CURRENT

| ZERO-CROSS SECTION EXTRACTION UNIT | FEATURE VALUE CALCULATION UNIT | ABNORMALITY DIAGNOSTIC UNIT | TRANSMISSION UNIT |

[Fig 3]

15

```
ELECTRIC MOTOR          ┌──────────┐          ┌──────────────┐
PHASE CURRENT    ──────▶ │  STEADY   │ ───────▶ │ SECTION CURRENT │ ──────▶ SECTION DATA
(DIAGNOSIS DATA)         │  STATE    │          │ RETENTION UNIT  │
                         │ WAITING UNIT│        └──────────────┘
                         └──────────┘
                            20                      21
```

[Fig 4]

[Fig 5]

[Fig 6]

[Fig 7]

[Fig 8]

<u>15A</u>

```
                    20                31
MEASURED       ┌──────────┐      ┌──────────┐
CURRENT        │ STEADY   │      │ SPECIFIC │
VALUE      ──> │ STATE    │─●──> │ SECTION  │──────────────────────────┐
(DIAGNOSIS     │ WAITING  │  │   │ SETTING  │                          │
DATA)          │ UNIT     │  │   │ UNIT     │                          │
               └──────────┘  │   └──────────┘                          │
                             │                                         ▼
                             │    32          33          34          35
                             │ ┌────────┐ ┌──────────┐ ┌────────┐ ┌──────────┐
                             │ │        │ │ SPECIFIC │ │        │ │ SECTION  │
                             │ │        │ │FREQUENCY │ │        │ │ DATA     │   SECTION
                             └>│FFT UNIT│>│COMPONENT │>│IFFT    │>│ RETENTIO │─> DATA
                               │        │ │SELECTION │ │UNIT    │ │ N UNIT   │
                               │        │ │UNIT      │ │        │ │          │
                               └────────┘ └──────────┘ └────────┘ └──────────┘
```

17

## INTERNATIONAL SEARCH REPORT

| | International application No. |
|---|---|
| | **PCT/JP2024/012988** |

| **A.** | **CLASSIFICATION OF SUBJECT MATTER** |
|---|---|

*G01M 99/00*(2011.01)i; *G01M 13/02*(2019.01)i; *G21C 7/08*(2006.01)i
FI:   G01M99/00 A; G01M13/02; G21C7/08 100

According to International Patent Classification (IPC) or to both national classification and IPC

| **B.** | **FIELDS SEARCHED** |
|---|---|

Minimum documentation searched (classification system followed by classification symbols)

G01M99/00; G01M13/00-13/045; G21C7/08-7/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2010-133894 A (HITACHI, LTD.) 17 June 2010 (2010-06-17)<br>paragraphs [0017]-[0060], fig. 1-4 | 1-13 |
| A | JP 6764516 B1 (DMG MORI CO., LTD.) 30 September 2020 (2020-09-30)<br>paragraphs [0011]-[0085], fig. 1-6 | 1-13 |
| A | JP 2022-26620 A (MITSUBISHI HEAVY INDUSTRIES, LTD.) 10 February 2022<br>(2022-02-10)<br>paragraphs [0013]-[0084], fig. 1-10 | 1-13 |
| A | JP 6874843 B2 (NEC CORPORATION) 19 May 2021 (2021-05-19)<br>paragraphs [0031]-[0075], fig. 1-5 | 1-13 |
| A | KR 10-0841528 B1 (KOREA ATOMIC ENERGY RESEARCH INSTITUTE) 25 June 2008<br>(2008-06-25)<br>entire text, all drawings | 1-13 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012988**

| Patent document cited in search report | | | Publication date (day/month/year) | Patent family member(s) | Publication date (day/month/year) |
|---|---|---|---|---|---|
| JP | 2010-133894 | A | 17 June 2010 | (Family: none) | |
| JP | 6764516 | B1 | 30 September 2020 | US 2022/0410332 A1 paragraphs [0024]-[0112], fig. 1-6 WO 2021/090842 A1 EP 4043853 A1 CN 114729850 A | |
| JP | 2022-26620 | A | 10 February 2022 | US 2023/0288482 A1 paragraphs [0032]-[0107], fig. 1-10 WO 2022/024421 A1 | |
| JP | 6874843 | B2 | 19 May 2021 | US 2020/0166552 A1 paragraphs [0051]-[0092], fig. 1-5 WO 2019/017345 A1 | |
| KR | 10-0841528 | B1 | 25 June 2008 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1010264 A